# EUROPÄISCHE PATENTANMELDUNG

(11) **EP 1 516 534 A1**
(43) Veröffentlichungstag der Anmeldung: **23.03.2005**
(21) Anmeldenummer: 04020702.9
(22) Anmeldetag: 01.09.2004
(51) Int. Cl.: A21B 1/26, A21B 1/40

(54) **Backofen**

(30) Priorität: 16.09.2003 DE 10342657
(71) Anmelder: Werner & Pfleiderer Lebensmitteltechnik GmbH, 91550 Dinkelsbühl (DE)
(72) Erfinder: Habermann, Christian, 91744 Weiltingen (DE); Meier, Alexander, 91602 Dürrwagen (DE); Knost, Dieter, 91550 Dinkelsbühl (DE)
(74) Vertreter: Hofmann, Matthias, Dr.

(57) **Zusammenfassung**

Ein Backofen (1) zur Zubereitung von Backgut (3) hat einen Zugabeabschnitt (6) mit einer Zugabeöffnung zur Zugabe von Backgut (3), einen Backraum (9) und einen Ausgabeabschnitt (22) mit einer Ausgabeöffnung zur Ausgabe von Backgut (3). Eine Umluft-Einrichtung umfasst eine einen Umluftstrom erzeugende Umluftquelle (25), eine Umluft-Heizeinrichtung (27) und einen Umluft-Führungskanal (48), der abschnittsweise durch den Backraum (9) gebildet ist. Eine Transporteinrichtung transportiert Backgut (3) von der Zugabe- zur Ausgabeöffnung. Hierzu weist die Transporteinrichtung eine Mehrzahl von über Umlenkrollen (13) geführte Endlos-Transportbänder (8, 10 bis 12) auf, welche innerhalb des Backraums (9) so zueinander angeordnet sind, dass eine Übergabe des Backguts (3) zwischen zwei benachbarten Endlosbändern (8, 10 bis 12) unter Schwerkrafteinfluss erfolgt. Es resultiert ein Backofen (1), bei dem Backgut (3) während des Backens bewegt und möglichst gleichmäßig verteilt werden kann.

## Beschreibung

Die Erfindung betrifft einen Backofen nach dem Oberbegriff des Anspruches 1.

Ein derartiger Backofen ist durch offenkundige Vorbenutzung bekannt. Derartige Backöfen haben hinsichtlich der Backdauer des Backguts sowie hinsichtlich ihrer Handhabbarkeit noch Verbesserungspotential.

Es ist daher die Aufgabe der vorliegenden Erfindung, einen Backofen der eingangs genannten Art derart weiterzubilden, dass mit diesem eine kürzere Backzeit bei gleichzeitig möglichst verbesserter Handhabbarkeit des Backofens realisiert werden kann. Zudem soll die Transporteinrichtung optisch gefällig ausgebildet sein, so dass der Einsatz des Backofens insbesondere auch in einem Ladengeschäft möglich ist.

Diese Aufgabe ist erfindungsgemäß gelöst durch einen Backofen mit den Merkmalen des Kennzeichnungsteils des Anspruchs 1.

Erfindungsgemäß wurde erkannt, dass sich ein effizienteres Backen des Backguts dann ergibt, wenn dieses einerseits im Umluftstrom bewegt ist und andererseits im Backraum möglichst gleichmäßig verteilt. Die Übergabe des Backguts zwischen den Endlos-Transportbändern kann dabei insbesondere so gestaltet werden, dass das Backgut bei der Übergabe automatisch übergeben und/oder gewendet wird, was die gleichmäßige Umströmung des Backguts mit Umluft begünstigt.

Eine Anordnung der Endlos-Transportbänder nach Anspruch 2 ermöglicht einen langen Transportweg in einem gleichzeitig kompakten Backraum. Eine derartige Transporteinrichtung kann optisch gefällig gestaltet werden.

Endlos-Transportbänder nach Anspruch 3 verbessern die Umströmung des Backguts.

Eine Schleuse nach Anspruch 4 verhindert, dass bei der Zu- bzw. Ausgabe des Backguts Wärme aus dem Backraum verloren geht.

Eine Schleuse nach Anspruch 5 lässt sich mit geringem Aufwand realisieren.

Ein Ausgabeabschnitt nach Anspruch 6 bietet die Möglichkeit, die Backzeit vorzugeben, ohne dass hierzu die Geschwindigkeit der Transporteinrichtung verändert werden muss. Dies vereinfacht die Ausgestaltung der Transporteinrichtung. Dabei ist eine Ausgestaltung des Backofens derart möglich, dass unterschiedliche Typen von Backgut, die auch eine unterschiedliche Backzeit erfordern, in der gleichen Charge im Backofen verarbeitet werden.

Eine Umluft-Steuereinrichtung nach Anspruch 7 schafft gleichmäßigere Backverhältnisse für das im Backraum transportierte Backgut. Über die Umströmung des Backguts längs mindestens zweier vorgegebener Strömungswege mitteln sich Temperaturgradienten der Umluft längs der Umluftströmung aus.

Eine Umluft-Lenkeinheit nach Anspruch 8 lässt sich mit relativ geringem Aufwand herstellen.

Eine Umluft-Steuerung nach Anspruch 9 lässt sich einfach realisieren.

Eine Ausführungsform des Backofens nach Anspruch 10 erleichtert zu Beginn eines Backvorgangs das Aufheizen des Backraums. Gleichzeitig kann das Backgut unter dem Einfluss der Vakuumpumpe im Eigendampf backen.

Alternativ oder zusätzlich zur bevorzugten Ausführungsform nach Anspruch 10 kann eine Beschwadungseinrichtung nach Anspruch 11 vorgesehen sein. Die Beschwadungseinrichtung führt zu einer kontrollierten Befeuchtung des Backguts, was zu einer Verbesserung des Backergebnisses führt. In Verbindung mit der Vakuumpumpe lässt sich mit der Beschwadungseinrichtung ein gleichmäßiges Befeuchten des Backguts realisieren, was das Backergebnis noch einmal verbessert.

Ausführungsbeispiele der Erfindung werden nachfolgend anhand der Zeichnung näher erläutert. In dieser zeigen:
- Fig. 1: eine perspektivische Ansicht eines erfindungsgemäßen Backofens;
- Fig. 2: einen vertikalen Schnitt durch den Backofen von Fig. 1 mit abgenommenen Außengehäuse;
- Fig. 3: einen zur Schnittebene der Fig. 2 senkrechten vertikalen Schnitt durch den Backofen von Fig. 1 mit abgenommenen Außengehäuse;
- Fig. 4: schematisch eine weitere Ausführungsform eines erfindungsgemäßen Backofens in einem zu Fig. 2 ähnlichen Schnitt;
- Fig. 5: einen Zugabeabschnitt des Backofens von Fig. 4 in einer vergrößerten, nähere Details zeigenden Darstellung; und
- Fig. 6: einen Ausgabeabschnitt des Backofens von Fig. 4 in einer vergrößerten, nähere Details zeigenden Darstellung.

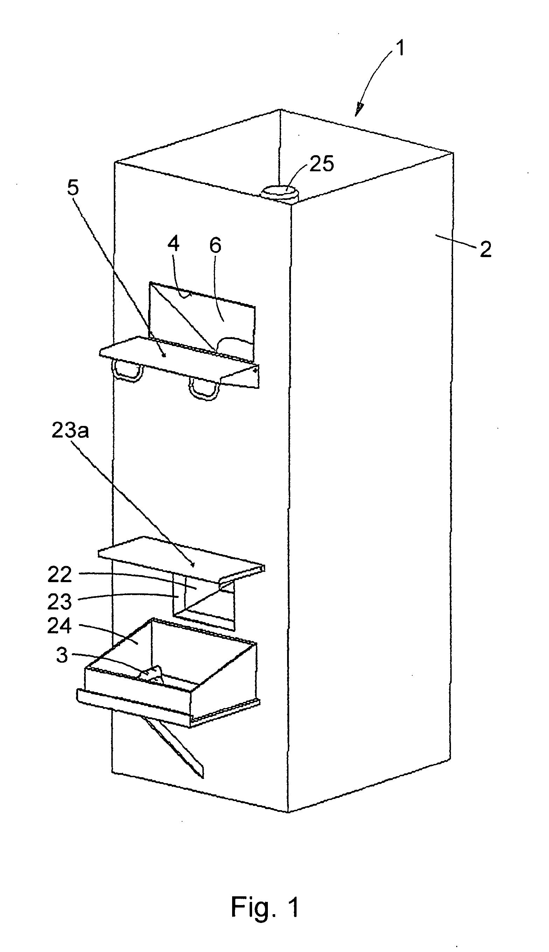

In den Fig. 1 bis 3 ist eine erste Ausführungsform eines insgesamt mit dem Bezugszeichen 1 bezeichneten Backofens dargestellt. Dieser weist ein Außengehäuse 2 auf, welches eine quadratische Grundfläche von etwa 1 m² einnimmt und eine Höhe von ca. 2 Metern hat. Backgut 3, z. B. tief- oder teilgefrorene Brötchen, gelangt über eine Zugabeöffnung 4, die manuell von einer Zugabetür 5 verschlossen werden kann, ins Innere des Backofens 1.

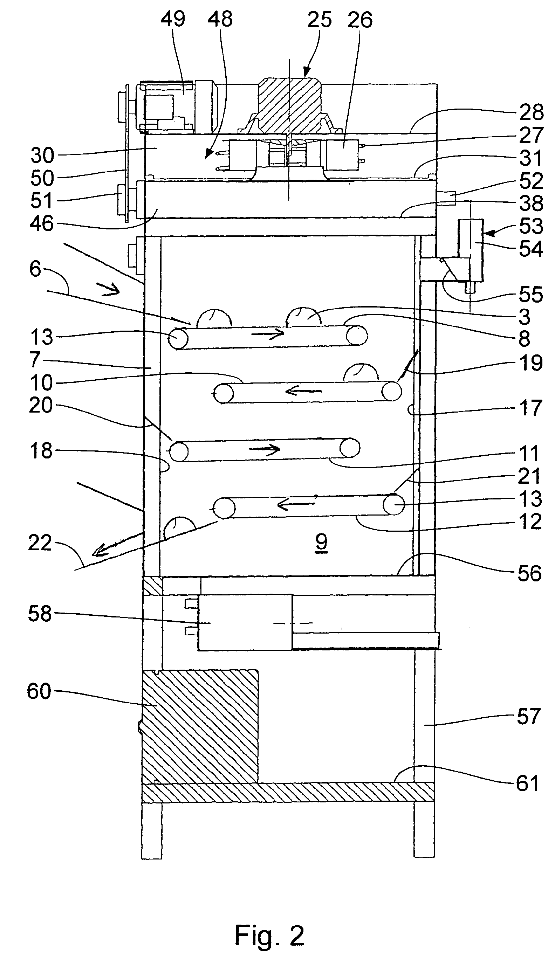

Mit der Zugabeöffnung 4 fluchtend ist ein schräg nach unten führender Zugabeschacht 6 angeordnet, durch den Backgut in ein Innengehäuse 7 des Backofens 1 gelangen kann. Der Zugabeschacht 6 endet im Innengehäuse 7 über einem ersten, obersten Endlos-Transportband 8, mit welchem das Backgut 3 in Fig. 2 von links nach rechts in einem vom Innengehäuse 7 umschlossenen Backraum 9 transportiert wird. Insgesamt weist der Backofen 1 im Backraum 9 neben dem Endlos-Transportband 8 noch drei oder mehrere weitere, untereinander angeordnete Endlos-Transportbänder 10, 11, 12 auf. Die Transportrichtung der Endlos-Transportbänder 8 sowie 10 bis 12 kehrt sich dabei von oben nach unten jeweils um, so dass neben dem Endlos-Transportband 8 auch das übernächste Endlos-Transportband 11 eine Transportrichtung für Backgut 3 in Fig. 2 von links nach rechts aufweist, während die beiden anderen Endlos-Transportbänder 10, 12 eine Transportrichtung für Backgut 3 in Fig. 2 von rechts nach links vorgeben. Die Endlos-Transportbänder 8 sowie 10 bis 12 werden von jeweils zwei am Innengehäuse 7 gelagerten Umlenkrollen 13 geführt, von denen jeweils eine angetrieben ist. Hierzu weisen die angetriebenen Umlenkrollen 13 jeweils ein Antriebsritzel 14 auf, welches mit einer Antriebskette 15 außerhalb des Innengehäuses 7 zusammenarbeitet. Die Antriebskette 15 wird über einen Antriebsmotor 16 angetrieben, der am Innengehäuse 7 angeflanscht ist.

Die Endlos-Transportbänder 8 sowie 10 bis 12 sind längs ihrer Transportrichtung so gegeneinander versetzt angeordnet, dass sie im Backraum 9 einen zick-zack-förmigen Transportweg vorgeben. Das Abgabeende der beiden in Fig. 2 von links nach rechts transportierenden Endlos-Transportbänder 8, 11 ist dazu von einer gegenüberliegenden Innenwand 17 des Innengehäuses 7 soweit beabstandet, dass zwischen den Abgabeenden und der Innenwand 17 ein Durchtritt von Backgut 3 unter Schwerkrafteinfluss möglich ist. Die beiden in Fig. 2 von rechts nach links transportierenden Endlos-Transportbänder 10, 12 sind mit ihren Abgabeenden zur Innenwand 18 des Innengehäuses 7, die der Innenwand 17 gegenüberliegt, beabstandet angeordnet, so dass zwischen diesen Abgabeenden und der Innenwand 18 ebenfalls ein Durchtritt von Backgut 3 unter Schwerkrafteinfluss möglich ist. Beim Durchtritt unter Schwerkrafteinfluss wird das Backgut 3 an das jeweils nächste, darunterliegende Endlos-Transportband 10 bis 12 übergeben. Nahe den Zugabeenden der Endlos-Transportbänder 10 bis 12 sind schräg verlaufende und an den Innenwänden 17 bzw. 18 angebrachte Leitbleche 19 bis 21 für das Backgut 3 montiert, die verhindern, dass Backgut 3 zwischen den Zugabeenden der Endlos-Transportbänder 10 bis 12 und den diesen benachbarten Innenwänden 17, 18 hindurchfallen.

Dem Abgabeende des untersten Endlos-Transportbandes 12 ist ein Ausgabeschacht 22 zugeordnet, der mit einer Ausgabeöffnung 23 im Außengehäuse 2 fluchtet. Die Ausgabeöffnung 23 kann mit einer Ausgabeklappe 23a verschlossen werden. Unterhalb der Ausgabeöffnung 23 ist ein Vorratsbehälter 24 für fertig gebackenes Backgut 3 angeordnet, der vom Außengehäuse 2 getragen ist.

Während des Transports im Backofen 1 wird das Backgut 3 von Umlauft umströmt. Diese wird erzeugt von einer Umluftquelle 25 mit einem angetriebenen Gebläserotor 26 und beheizt von einer Heizspirale 27. Die oberhalb des Backraums 9 angeordnete Umluftquelle 25 wird von einem wärmeisolierten Zwischenboden 28 im Innengehäuse 7 getragen. Natürlich kann die Umluftquelle 25 auch seitlich des Backraums 9 angeordnet sein.

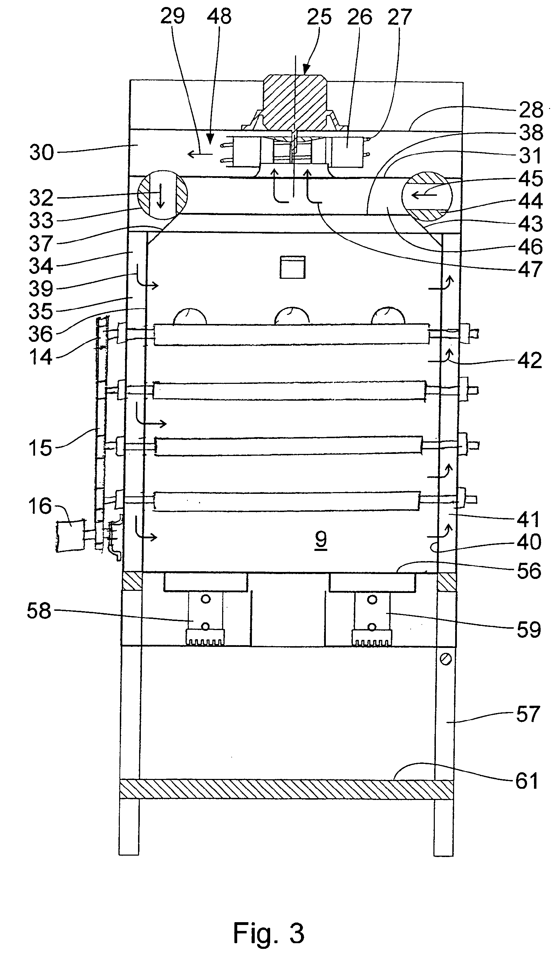

In Fig. 3 ist ein erster Strömungsweg für die erzeugte Umluft durch den Backraum 9 dargestellt. Die von der Umluftquelle 25 erzeugte Umluft strömt zunächst, wie in Fig. 3 durch einen Strömungsrichtungspfeil 29 angedeutet, durch eine erste Umluftkammer 30, die zwischen dem Zwischenboden 28 und einem parallel hierzu darunter angeordneten zweiten Zwischenboden 31 ausgebildet ist. Anschließend strömt die Umluft, wie durch einen Strömungsrichtungspfeil 32 angedeutet, nach unten durch ein erstes Ventilelement 33 mit zylindrischem Zweiwege-Ventilkörper. Letzteres ist um eine horizontale Achse, die mit der Längsachse des zylindrischen Ventilkörpers zusammenfällt, drehbar und ist so drehpositioniert, dass es eine vertikale Strömungsverbindung zwischen der ersten Umluftkammer 30 und einer zweiten Umluftkammer 34 freigibt. Diese ist seitlich begrenzt durch eine in Fig. 3 linke Seitenwand 35 des Innengehäuses 7 und eine parallel zu dieser benachbart angeordnete gasdurchlässige Zwischenwand 36 sowie von einem schräg verlaufenden Luftleitblech 37, welches zwischen der Zwischenwand 36 und einem dritten Zwischenboden 38 verläuft, der unterhalb des zweiten Zwischenbodens 31 angeordnet ist.

Wie durch Strömungsrichtungspfeile 39 in Fig. 3 angedeutet, strömt die Umluft aus der zweiten Umluftkammer 34 durch die gasdurchlässige Zwischenwand 36 hindurch in den Backraum 9. Die Umluft umströmt dann das Backgut 3 im Backraum 9, wobei sie auch die Endlos-Transportbänder 8 sowie 10 bis 12 durchtreten kann. Das Backgut 3 wird hierdurch, während es von den Endlos-Transportbändern 8 sowie 10 bis 12 transportiert wird, gebacken. Nach Umströmen des Backguts 3 durchtritt die Umluft eine in Fig. 3 rechts dargestellte gasdurchlässige Zwischenwand 40, die der Zwischenwand 36 gegenüberliegt, und strömt durch eine spiegelbildlich zur zweiten Umluftkammer 34 und in Fig. 3 rechts der Zwischenwand 40 ausgebildete dritte Umluftkammer 41, wie in Fig. 3 durch Strömungsrichtungspfeile 42 angedeutet, nach oben. Hierbei strömt die Umluft an einem die dritte Umluftkammer 41 ebenfalls begrenzenden Luftleitblech 43 vorbei, welches spiegelbildlich schräg zum Luftleitblech 37 zwischen der Zwischenwand 40 und dem Zwischenboden 38 montiert ist. Oberhalb des zweiten Luftleitblechs 43 ist ein zweites Ventilelement 44 angeordnet. Dieses ist in gleicher Weise wie das erste Ventilelement 33 ausgebildet, diesem gegenüber jedoch um 90° verdreht drehpositioniert, so dass es eine horizontale Strömungsverbindung für die Umluft vorgibt. Die Umluft strömt daher, wie in Fig. 3 durch einen Strömungsrichtungspfeil 45 angedeutet, von der dritten Umluftkammer 41 in eine vierte Umluftkammer 46. Diese ist in Fig. 3 seitlich begrenzt durch die beiden Ventilelemente 33 und 44, nach oben begrenzt durch den zweiten Zwischenboden 31 und nach unten begrenzt durch den die beiden Luftleitbleche 37 und 43 verbindenden dritten Zwischenboden 38. Von der vierten Umluftkammer 46 aus strömt die Umluft, wie durch Strömungsrichtungspfeile 47 angedeutet, durch Durchtrittsöffnungen im zweiten Zwischenboden 31 zurück zur Umluftquelle 25. Die Umluftkammern 30, 34, 41 und 46 bilden gemeinsam mit dem Backraum 9 einen Umluft-Führungskanal 48.

In der genannten Drehposition des ersten Ventilelements 33 dichtet dieses zwischen dem zweiten Zwischenboden 31 und dem dritten Zwischenboden 38 die vierte Umluftkammer 46 ab, so dass die Umluft, angesaugt durch den Gebläserotor 25, wieder in die erste Umluftkammer 30 einströmt.

Die Ventilelemente 33 und 44 werden getaktet zwischen den vorstehend beschriebenen ersten Drehpositionen, in denen sie den ersten, in Fig. 3 gezeigten Strömungsweg freigeben, und zweiten Drehpositionen, die gegenüber den ersten Drehpositionen jeweils um 90° verdreht sind und in denen sie einen zweiten Strömungsweg freigeben, umgeschaltet. Bei diesem zweiten Strömungsweg gibt das erste Ventilelement 33 einen horizontalen Durchlass frei und das zweite Ventilelement 44 gibt einen vertikalen Durchlass frei, so dass bei dem zweiten Strömungsweg die Umluft von der ersten Umluftkammer 30 zunächst in die dritte Umluftkammer 41, dann durch die in Fig. 3 rechte Zwischenwand 40 in den Backraum 9, von diesem durch die linke Zwischenwand 36 in die zweite Umluftkammer 34 und von dort durch das erste Ventilelement 33 in die vierte Umluftkammer 46 und angesaugt durch den Gebläserotor 25 wieder in die erste Umluftkammer 30 strömt. Backgut 3, welches in Fig. 3 bezüglich der Endlos-Transportbänder 8, 10 bis 12 außermittig angeordnet ist, wird durch dieses Umschalten der Strömungswege während der halben Beströmungsdauer z. B. von Umluft umströmt, welche einen geringeren Weg durch den Backraum 9 zurückgelegt hat, und in der anderen Hälfte der Beströmungsdauer von Umluft, welche einen weiteren Weg durch den Backraum 9 zurückgelegt hat. In Kombination mit dem Transport des Backguts 3 von oben nach unten durch den Backraum 9 ergibt dies unabhängig von der jeweiligen Position des einzelnen Backguts 3 auf den Endlos-Transportbändern 8, 10 bis 12 integral vergleichbare Backverhältnisse, so dass das Backgut 3 gleichmäßig durchgebacken wird. Temperaturgradienten der Umluft längs der beiden Strömungswege werden auf diese Weise ausgeglichen.

Beim Umschalten zwischen den Strömungswegen werden die Ventilelemente 33, 44 mittels eines Ventilelement-Antriebsmotors 49 verdreht. Dieser ist auf dem ersten Zwischenboden 28 des Innengehäuses 7 montiert und treibt über einen Antriebsriemen 50 Transmissionszahnräder 51 an, die drehfest mit Wellen 52 verbunden sind, die ihrerseits drehfest mit den Ventilelementen 33, 44 verbunden sind und mit deren Drehachsen fluchten.

Der Druck im Backraum 9 wird begrenzt durch eine Dampfentlastungseinrichtung 53, die einen aus dem Backraum 9 herausführenden und um 90° nach oben abknickenden Dampfentlastungskanal 54 aufweist, der, solange kein Überdruck im Backraum 9 vorliegt, von einer Dampfentlastungsklappe 55 verschlossen ist.

Unterhalb eines Backraumbodens 56 sind, getragen von einem Traggestell 57, zwei Beschwadungsmodule 58, 59 angeordnet. Diese dienen der Erzeugung von Wasserdampf-Schwaden, mit denen das Backgut 3 im Backraum 9 gesteuert während des Backvorgangs befeuchtet werden kann.

Der Transportband-Antriebsmotor 16, die Umluftquelle 25, der Ventilelement-Antriebsmotor 49 und die Beschwadungsmodule 58, 59 werden von einem zentralen Steuermodul 60 während des Backvorgangs angesteuert, welches von einem Zwischenboden 61 des Traggestells 57 getragen ist.

Über die Transportgeschwindigkeit der Endlos-Transportbänder 8, 10 bis 12 kann die Backzeit eingestellt werden. Die Backzeit kann z. B. zwischen 20 und 30 Minuten variiert werden.

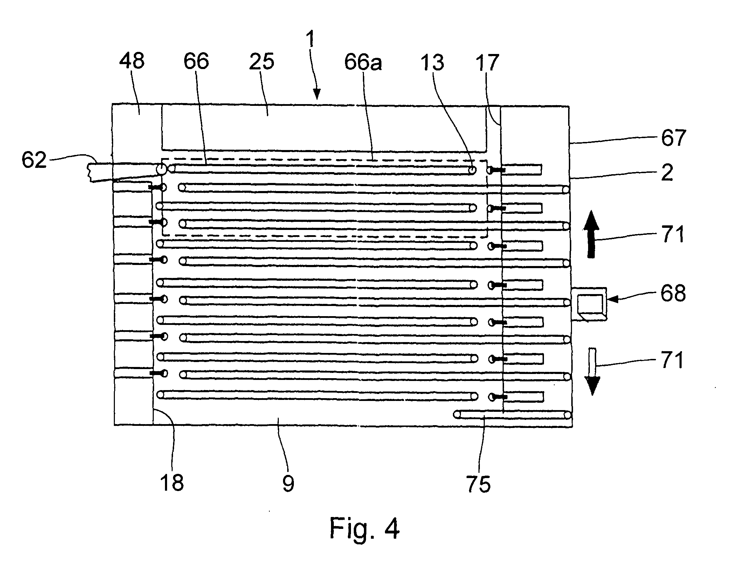

In den Fig. 4 bis 6 ist eine weitere Ausführungsform eines Backofens mit Endlos-Transportbändern dargestellt. Bauteile, die denjenigen entsprechen, die schon unter Bezugnahme auf die Ausführungsform nach den Fig. 1 bis 3 beschrieben wurden, tragen die gleichen Bezugszeichen und werden nicht nochmals im Einzelnen erläutert.

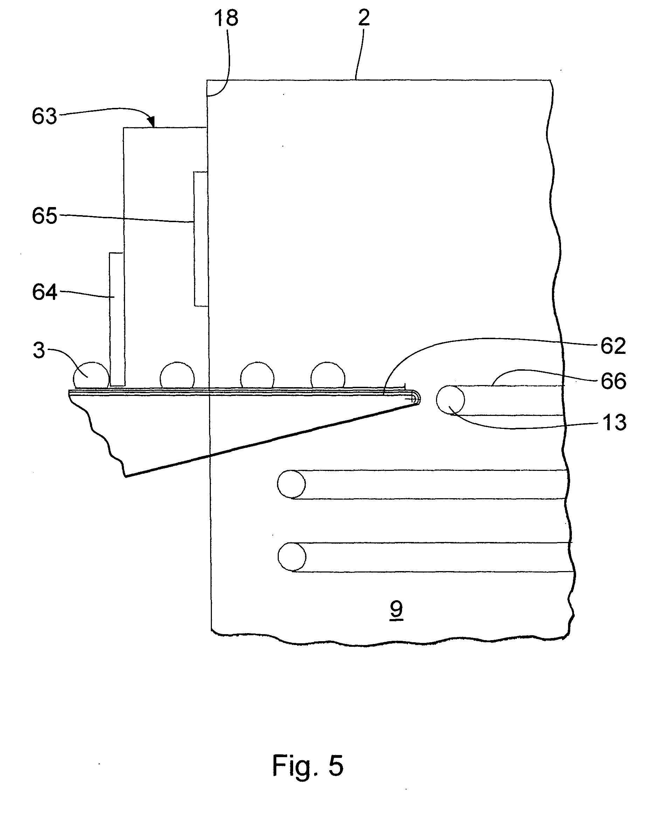

Die Zugabe von Backgut 3 erfolgt bei der Ausführung nach den Fig. 4 bis 6 über ein Zugabe-Transportband 62, welches in der Zeichnung gebrochen und in Fig. 5 stärker im Detail dargestellt ist. Anstelle einer Zugabeöffnung weist der Backofen 1 in der Ausführung nach den Fig. 4 bis 6 eine Zugabeschleuse 63 auf, die in der schematischen Darstellung nach Fig. 4 nicht gezeigt ist. Die Zugabeschleuse 63 umfasst zwei relativ zur Transportrichtung des Zugabe-Transportbandes 62 hintereinander angeordnete Schiebetüren 64, 65, die in vertikaler Richtung verschiebbar sind.

Die vom Backgut 3, welches vom Zugabe-Transportband 62 transportiert wird, zuerst erreichte Schiebetür 64 ist in Fig. 5 in einer Schließstellung dargestellt, in welcher die Schiebetür 64 den Backraum 9 des Backofens 1 der Ausführung nach den Fig. 4 bis 6 wärmeisolierend verschließt. Dabei dichtet die untere Stirnwand der Schiebetür 64 wärmeisolierend mit dem Fördertrum des Zugabe-Transportbandes 62 ab. Die zweite Schiebetür 65 der Zugabeschleuse 63 ist in Fig. 5 in einer Offenstellung gezeigt, in der ein Durchtritt von Backgut 3 durch die Schiebetür 65 möglich ist. Immer dann, wenn eine der beiden Schiebetüren 64, 65 in der Offenstellung positioniert ist, ist die andere in der Schließstellung positioniert, so dass der Backraum 9 immer durch mindestens eine der beiden Schiebetüren 64, 65 wärmeisolierend verschlossen ist. Die Schiebetüren 64, 65 werden abwechselnd so geöffnet, dass Backgut 3 durch die Zugabeschleuse 63 in den Backraum 9 eintreten kann. Vom Abgabeende des Zugabe-Transportbandes 62 wird das Backgut 3 dann an ein erstes, oberstes Endlos-Transportband 66 übergeben.

Insgesamt weist der Backofen 1 der Ausführung nach den Fig. 4 bis 6 dreizehn untereinander angeordnete Endlos-Transportbänder 66 auf, die wie die Endlos-Transportbänder 8, 10 bis 12 der Ausführung nach den Fig. 1 bis 3 so versetzt zueinander angeordnet sind, dass sie im Backraum 9 einen zick-zack-förmigen Transportweg vorgeben. Auch eine andere Anzahl von Endlos-Transportbändern, z. B. fünfzehn Endlos-Transportbänder, kann vorgesehen sein. Die obersten vier Endlos-Transportbänder 66 definieren im Backraum 9 eine Auftauzone 66a für das Backgut 3. Mit Hilfe einer Vakuumpumpe, die in der Zeichnung nicht dargestellt ist, ist im Backraum 9 der Ausführung nach den Fig. 4 bis 6 ein vorgegebener Unterdruck einstellbar. Hierdurch wird in der Auftauzone 66a ein schnelleres Beheizen des Backguts 3 ermöglicht. Gleichzeitig kann das Backgut 3 in der Auftauzone 66a im Eigendampf backen.

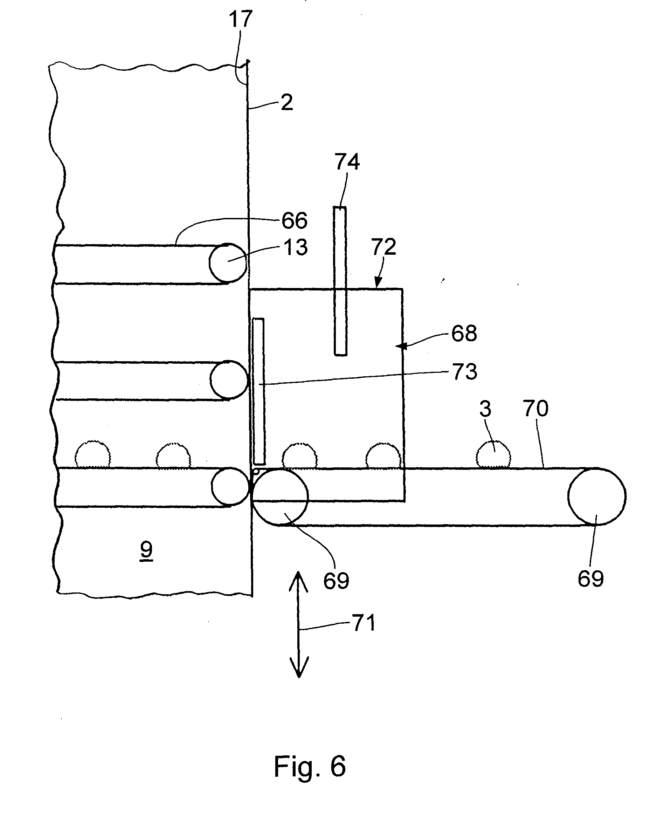

Bedingt durch die versetzte Anordnung sind die Abgabeenden jedes zweiten Endlos-Transportbandes 66 einer in Fig. 4 rechten Seitenwand 67 des Backofens 1 nach den Fig. 4 bis 6 benachbart angeordnet. Abhängig von einer Vorgabe wahlweise von einem dieser Abgabeenden kann das Backgut 3 an eine Ausgabe-Transporteinrichtung 68 übergeben werden, die in Fig. 4 schematisch und in Fig. 6 stärker im Detail dargestellt ist. Die Ausgabe-Transporteinrichtung 6 weist ein um zwei Umlenkrollen 69 geführtes Endlos-Ausgabetransportband 70 auf. Das Endlos-Ausgabetransportband 70 kann mitsamt den Umlenkrollen 69 in vertikaler Richtung zum Außengehäuse 2 gesteuert verlagert werden, wie durch einen Doppelpfeil 71 in den Fig. 4 und 6 angedeutet.

Je nachdem, von welchen der Endlos-Transportbänder 66 eine Übergabe an das Endlos-Ausgabetransportband 70 erfolgt, öffnet eine diesem Endlos-Transportband 66 zugeordnete Ausgabeöffnung in der Seitenwand 67. Eine Ausgabeschleuse 72, die mit dem Endlos-Ausgabetransportband 70 längs des Doppelpfeils 71 verlagert werden kann, stellt sicher, dass durch diese Ausgabeöffnung nicht unnötig viel Wärme aus dem Backraum 9 entweicht. Hierzu weist die Ausgabeschleuse 72 zwei Schiebetüren 73, 74 auf, die, wie im Zusammenhang mit den Schiebetüren 64, 65 der Zugabeschleuse 63 erläutert, wechselweise derart zwischen einer Offen- und einer Schließstellung verlagert werden können, dass mindestens eine der Schiebetüren 73, 74 in der Schließstellung verbleibt.

Zur Steuerung der Dauer des Backvorgangs wird mit Hilfe einer bei der Ausführung nach den Fig. 4 bis 6 nicht dargestellten Steuereinrichtung die Vertikalposition der Ausgabe-Transporteinrichtung 68 so vorgegeben, dass diese mit einem vorgegebenen Endlos-Transportband 66 zusammenarbeitet. Zur Ausgabe von Backgut 3 wird dieses vorgegebene Endlos-Transportband 66 so angetrieben, dass Backgut 3 in Richtung hin zur Ausgabe-Transporteinrichtung 68 transportiert wird. Das Backgut 3 gelangt dann über die dem vorgegebenen Endlos-Transportband 66 zugeordnete Durchtrittsöffnung und die Ausgabeschleuse 72 aus dem Backraum 9 und wird über das Endlos-Ausgabetransportband 70 zu einem entsprechenden Lagerort, z. B. einem Vorratsbehälter, weitertransportiert. Je weiter oben über die Ausgabe-Transporteinrichtung 68 eine Entnahme von Backgut 3 aus dem Backraum 9 erfolgt, desto kürzer ist die Backzeit des Backguts 3. Soll die maximale Backzeit, die mit dem Backofen 1 der Ausführung nach den Fig. 4 bis 6 möglich ist, ausgenutzt werden, wird die Ausgabe-Transporteinrichtung 68 ganz nach unten verfahren, so dass sie mit einem untersten, kurzen Übergabe-Transportband 75 im Backraum 9 unterhalb des untersten Endlos-Transportbandes 66 zusammenarbeitet.

Die Endlos-Transportbänder 8, 10 bis 12, 66 und 75 können beispielsweise als flexible Drahtgitter ausgeführt sein.

Ein Betrieb der Ausführungen des Backofens nach den Fig. 1 bis 6 ist insbesondere derart möglich, dass unterschiedliche Typen von Backgut 3, die eine unterschiedliche Backzeit erfordern, in der gleichen Charge im Backofen 1 verarbeitet werden.

## Patentansprüche

1. Backofen (1) zur Zubereitung von Backgut (3)
- mit einem Gehäuse (2),
- mit einem Zugabeabschnitt (6; 62) mit einer Zugabeöffnung (4) zur Zugabe von Backgut (3),
- mit einem Backraum (9),
- mit einem Ausgabeabschnitt (22; 68) mit einer Ausgabeöffnung (23) zur Ausgabe von Backgut (3),
- mit einer Umluft-Einrichtung, welche umfasst
-- eine einen Umluftstrom erzeugende Umluftquelle (25),
-- eine Umluft-Heizeinrichtung (27),
-- einen Umluft-Führungskanal (48), der abschnittsweise durch den Backraum (9) gebildet ist,
- mit einer Transporteinrichtung (8, 10 bis 12; 66, 75), welche Backgut (3) von der Zugabeöffnung (4) zur Ausgabeöffnung (23) transportiert, **dadurch gekennzeichnet, dass**
- die Transporteinrichtung (8, 10 bis 12; 66, 75) eine Mehrzahl von über Umlenkrollen (13) geführte Endlos-Transportbänder (8, 10 bis 12; 66, 75) aufweist, welche innerhalb des Backraums (9) zueinander derart angeordnet sind, dass eine Übergabe des Backguts (3) zwischen zwei benachbarten Endlos-Transportbändern (8, 10 bis 12; 66, 75) unter Schwerkrafteinfluss erfolgt.

2. Backofen nach Anspruch 1, **dadurch gekennzeichnet, dass** die Endlos-Transportbänder (8, 10 bis 12; 66, 75) so zueinander angeordnet sind, dass sie im Backraum (9) einen zick-zack-förmigen Transportweg vorgeben.

3. Backofen nach Anspruch 1 oder 2, **dadurch gekennzeichnet, dass** die Endlos-Transportbänder (8, 10 bis 12; 66, 75) gasdurchlässig ausgeführt sind.

4. Backofen nach einem der Ansprüche 1 bis 3, **gekennzeichnet durch** eine Ausführung des Zugabe- und/oder des Ausgabeabschnitts als Schleuse (63, 72), welche von einem Transportband (62, 70) durchtreten wird.

5. Backofen nach Anspruch 4, **dadurch gekennzeichnet, dass** die Schleuse (63, 72) zwei relativ zur Transportrichtung hintereinander angeordnete Schiebetüren (64, 65; 73, 74) aufweist, welche in einer Offenstellung den Transportweg freigeben und in einer Schließstellung den Backraum (9) wärmeisolierend verschließen.

6. Backofen nach einem der Ansprüche 1 bis 5, **dadurch gekennzeichnet, dass** der Ausgabeabschnitt eine Ausgabe-Transporteinrichtung (68), insbesondere ein Endlos-Ausgabetransportband (70), aufweist, welche in vertikaler Richtung (71) zum Gehäuse (2) gesteuert derart verlagerbar ist, dass sie abhängig von einer Vorgabe wahlweise Backgut (3) von einem der Endlos-Transportbänder (66, 75) übernehmen kann.

7. Backofen nach einem der Ansprüche 1 bis 6, **gekennzeichnet durch** eine Umluft-Steuereinrichtung (60) mit mindestens einer Umluft-Lenkeinheit (33, 44), die derart zwischen mindestens zwei Stellpositionen verlagerbar ist, dass die Umluft längs eines bestimmten von mindestens zwei vorgegebenen Strömungswegen **durch** den Umluft-Führungskanal (48) strömt.

8. Backofen nach Anspruch 7, **dadurch gekennzeichnet, dass** die Umluft-Lenkeinheit (33, 44) als Ventilelement mit einem zylindrischen Zweiwege-Ventilkörper ausgebildet ist, wobei vorzugsweise zwei Ventilelemente vorgesehen sind.

9. Backofen nach Anspruch 7 oder 8, **dadurch gekennzeichnet, dass** die Umluft-Steuereinrichtung (60) derart ausgebildet ist, dass der Strömungsweg der Umluft getaktet zwischen den verschiedenen vorgebbaren Strömungswegen umgeschaltet wird.

10. Backofen nach einem der Ansprüche 1 bis 9, **gekennzeichnet durch** eine an den Backraum (9) angeschlossene und gesteuert zuschaltbare Vakuumpumpe, mit der im Backraum (9) ein vorgegebener Unterdruck einstellbar ist.

11. Backofen nach einem der Ansprüche 1 bis 10, **gekennzeichnet durch** eine an den Backraum (9) angeschlossene und gesteuert zuschaltbare Beschwadungseinrichtung (58, 59), mit der der Backraum (9) mit Schwaden versorgt werden kann.
